# EUROPEAN PATENT SPECIFICATION

(11) **EP 1 030 232 B1**
(45) Date of publication and mention of the grant of the patent: **25.09.2002**
(21) Application number: 99830738.3
(22) Date of filing: 26.11.1999
(51) Int. Cl.: G05D 16/06

(54) **Pressure regulator for compressible fluids**
Druckregler für kompressible Medien
Régulateur de pression pour fluides compressibles

(30) Priority: 19.02.1999 IT BO990070
(43) Date of publication of application: 23.08.2000
(73) Proprietor: O.M.T. OFFICINA MECCANICA TARTARINI S.p.A., 40013 Castel Maggiore (Bologna) (IT)
(72) Inventor: Tartarini, Roberto, 40013 Castel Maggiore (Bologna) (IT)
(74) Representative: Lanzoni, Luciano

(56) References cited:
- US-A- 2 898 930

## Description

The present invention relates to a pressure regulator for a compressible fluid, generally employed in plants operating with a gaseous fluid and which is particularly advantageous in systems for the distribution of city gas.

From the technical literature concerning the invention, apparatuses are known which continuously control some characteristic variables of a flow of gas - such as pressure or flow rate in terms of volume or mass - by means of: the measurement of the deviation of the actual value of that variable as compared with a theoretical reference value; and by the subsequent corrective intervention on the variable under control, driven by the pressure measured in the fluid downstream of the apparatus.

A regulator of this kind - know from US-2 988 930 and realised according to the preamble of Claim 1 - comprises a regulator body provided internally with a chamber for receiving the fluid, with a conduit for the inflow of the fluid into the chamber, with a conduit for the exhaust of the fluid from the chamber and with a shutter housed in the chamber, opposite to the inflow conduit and sustained by elastically yielding support means which contrast it in opposition to the direction of the flow of gas; the shutter delimiting, in combination with the inflow conduit, an interposed section for the outflow of the gas, and being movable between two limit conditions in correspondence with which the outflow section is nil or vice versa is greatest; the regulator further comprising means for driving the shutter provided with a control rod, acting on a first face of the shutter in opposition with the support means, which commands the opening of the outflow section according to a fluid pressure feeding back from the exhaust conduit; wherein the support means of said shutter and the control rod of said shutter are mutually offset and exert on the shutter, in mutual combination, a resulting couple of forces able to impose on the shutter an angular displacement about an axis transverse to the inflow conduit, said angular displacement determining the progressive opening, or - vice versa - the progressive closure of the outflow section of the gas interposed between the shutter and the inflow conduit.

In regulators of this kind, traditional and universally used, during the transitory periods wherein the inflow conduit opens and closes, the intervention of the shutter generates such fluid dynamic interference on the flow of gas as to initiate turbulent phenomena, as a consequence whereof the flow rates of the transiting gas are variables with laws that are certainly not linear. This negatively influences the regularity of the flow rate which reaches the user apparatus and entails a relatively long duration of the corrective actions.

The aim of the present invention, as it is characterised by the claims, is to eliminate the drawbacks linked to the abrupt closure of the outflow section, by means of a regulator wherein the shutter opens and closes the gas inflow conduit with a gradual and progressive intervention.

This result is obtained with a regulator according to the preamble of Claim 1, characterized in that the support means comprise a push rod aligned with the inflow conduit, checking the shutter in correspondence with its second face opposite the face whereon the control rod acts, and in that the control rod is laterally displaced with respect to the push rod.

The support means comprise in particular a push rod aligned with the inflow conduit, checking the shutter in correspondence with its face opposite to the face whereon the control rod acts. The shutter face whereon the push rod operates has concave, curved shape, with a relatively large radius of curvature and the push rod is provided with its own surface for checking the shutter, having complementary curved shape, but with a lesser radius of curvature. These characteristics allow to support the shutter with a contact that is strongly localised on a very reduced area, theoretically point-like, which entails, for the shutter, the possibility of a perfect swivelling which allows a fine regulation of the flow transit section and hence of the flow rate.

The shutter has a surface for checking against the inflow conduit which is depressed towards its own interior and in which engage prominent, tapered, edges of a nozzle inserted in the inflow conduit: this allows to obtain a constant and certain self-centring of the shutter on the nozzle and, hence, on the gas inflow conduit.

In order further to enhance the operative effectiveness of the regulator by controlling and minimising the disturbances induced on the transiting flow by turbulent phenomena, the regulator is provided with regularisation means, controlled by the external shutter, which intervene on the dynamics of the gas flow acting within the inflow conduit itself, upstream of the shutter.

These regularising means are preferably realised through the interaction with the nozzle of a body integral with the shutter and contained in the inflow conduit. The nozzle and the body are provided with related complementary, truncated cone-shaped walls which define an interposed passage.

In correspondence with the inclination assumed by the shutter during the opening phase, the passage is shut, in points that are differently situated longitudinally to the inflow conduit and which are determined by the occlusive contact of the wall of the shutter body with the wall of the nozzle. As consequence thereof, the flow of gas which travels through the passage is deviated and forced to assume helical trajectories corresponding to a forced vortex which minimises head losses and the turbulent effect which are set off in correspondence with the closure of the shutter and which hence increase the effectiveness of the regulating operation in terms of the progressiveness of the fluid flow rate.

Since the shutter actuation rod is lateral and external to the conduit for the inflow of gas into the chamber, the constructive constraints - existing in the state of the art - that obligate to construct the regulator body and the contiguous tank containing the organs for actuating the rod that drives the shutter with mutually complementary shapes and sizes, are removed.

Hence, a single regulator body can be associated modularly and indifferently to geometrically different tanks, for high and low pressures, to the advantage of the economical construction of the regulator.

The additional technical characteristics of the invention, according to the aforesaid aims, can be clearly noted from the content of the claims set out below and its advantages shall become more readily apparent in the detailed description that follows, made with reference to the accompanying drawings, which represent an embodiment provided purely by way of non limiting example, wherein:
- Figure 1 is an overall view of a first high pressure regulator realised according to the invention and shown in elevation and in longitudinal section view;
- Figure 2 shows a comparative diagram of the characteristics of a traditional reducer, indicated as RT, and respectively of the subject reducer, indicated as RA;
- Figure 3 is an overall view of a low pressure regulator realised according to the invention and shown in elevation and in longitudinal section view;
- Figure 4 is a detail of Figure 3 shown in highly enlarged scale;
- Figure 5 is a constructive variation of the detail in Figure 3, also shown in enlarged scale.

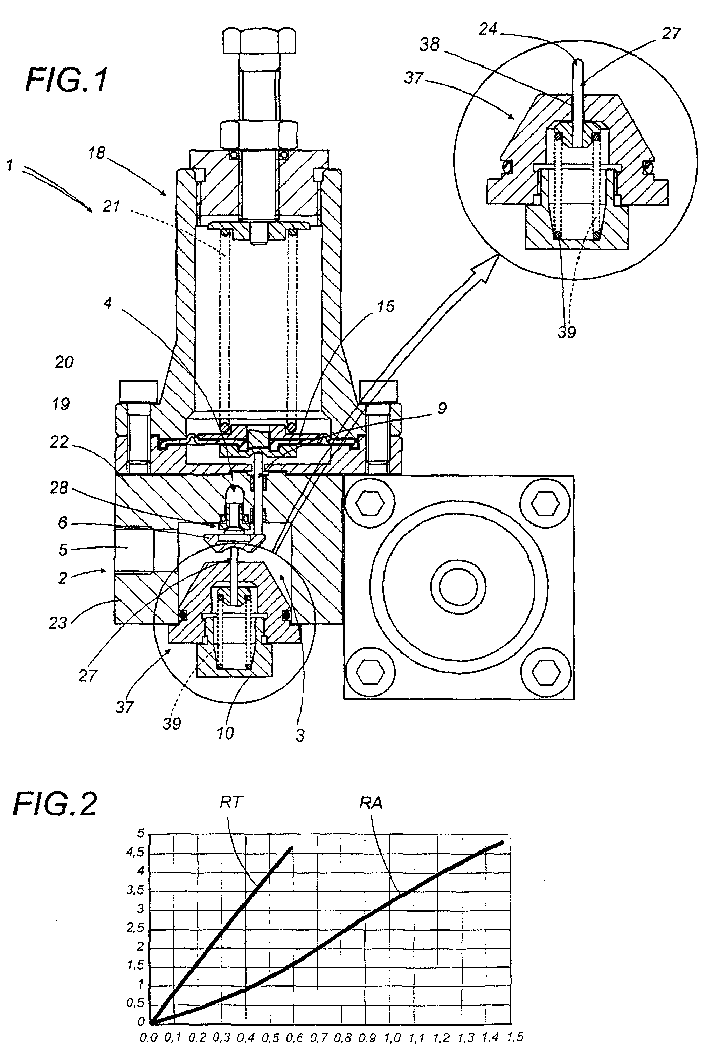

In accordance with Figures 1, 2 and 3 of the accompanying drawings, the subject invention relates to a driven pressure regulator 1 for a compressible fluid - represented in particular by methane gas to be distributed to residential and industrial users - essentially comprises a hollow regulator body 2, in whose interior is contained a movable shutter 6, sustained by related support means 27, 38, 37, 39 and actuated by driving means 9, 15 borne by an external tank 18, contiguous and connected to the regulator body 2.

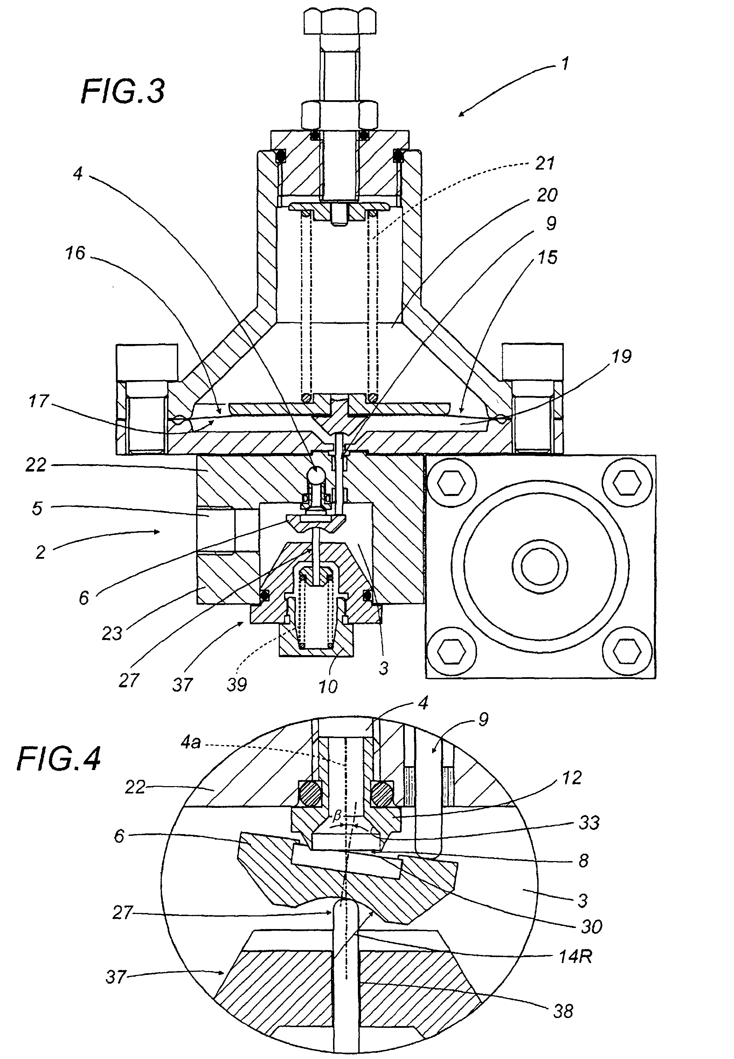

More specifically, the regulator body 2 is internally provided with a chamber 3 for receiving the fluid fed by an inflow conduit 4 which in turn receives the gas from the exterior and which is connected to an exhaust conduit 5 through which the gas is evacuated from the chamber 3 and sent towards a user apparatus. The inflow conduit 4 is provided, in its terminal portion proximate to chamber 3, with a tubular nozzle 28 (fig. 4) axially connected on the inflow conduit 4 and having an inner wall 33 with the shape of a truncated cone, inclined with respect to the axis 4a of the inflow conduit 4 and diverging with respect to the direction with which the gas flow travels through the inflow conduit to enter the chamber 3. The nozzle 28 projects from a summit wall 22 of the regulator body 2 towards the interior of the chamber 3 with its own extremity provided with an annular edge 12, projecting from the summit 22 and having a tapered extremity 29.

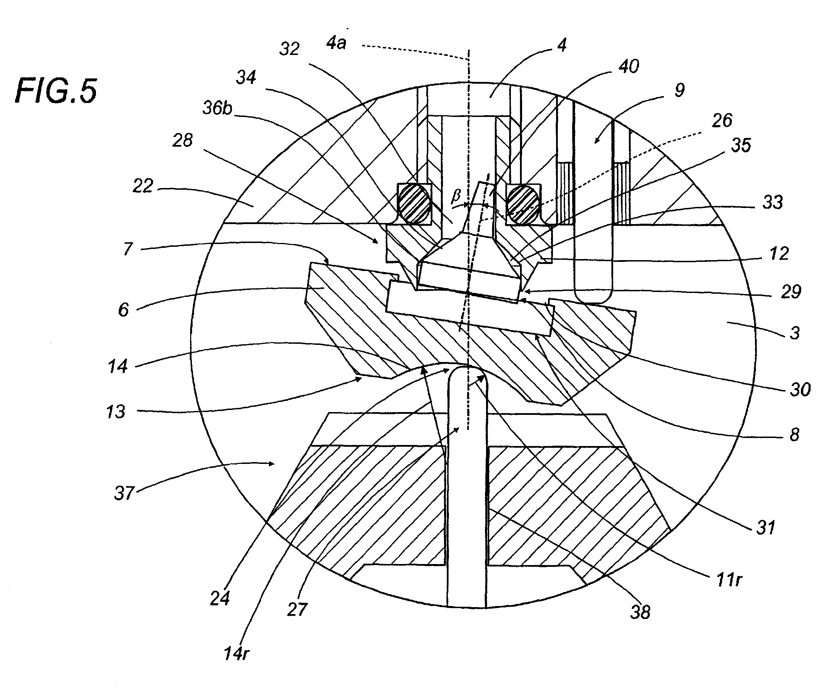

The support means 27, 38, 37, 39 of the shutter 6 are located in correspondence with a wall 23 of the regulator body 2 opposite to the gas inflow conduit 4 and comprise, in particular, a support body 37, internally hollow, provided with a guide 38 whereon is slidingly mounted a push rod 27 aligned with the inflow conduit 4 and provided with its own curved check surface 24 and, more in particular, of spherical shape with curvature radius indicated as 11r (see Figure 5).

Inside the support body 37 is housed an elastically yielding element 39, adjustable by means of a threaded ring nut 10, which acts on the push rod 27 and thrusts it constantly outside the support body 37 making it project inside the chamber 3.

The shutter 6, housed in the chamber 3, presents substantially truncated cone shape and opposes its first widened base face 7 to the gas inflow conduit 4 and a second opposite base face 13, narrowed, to the push rod 27 of the support means 27, 38, 37, 39.

Between the first face 7 of the shutter 6 and the opposite inflow conduit 4 is defined a gas outflow section 8, whose amplitude determines the flow rate of gas flowing into the chamber 3.

More specifically, the first face 7 is substantially planar and incorporates, inside a peripheral circular crown, a planar checking surface 30, depressed towards the interior of the shutter 6. Preferably, the planar checking surface 30 belongs to an insert 31 incorporated in the shutter 6 and made of a different material from that of the shutter.

The second face 13 of the shutter 6 instead has a central portion 14 with concave shape, complementary with that of the push rod 27, but which differs therefrom in that it presents a greater radius of curvature, indicated as 14R.

Thanks to the elastically contrasted checking action of the push-rod 27, the shutter 6 is constantly thrust towards the nozzle 28, in opposition to the direction of flow of the gas, and in a condition wherein the checking surface 30 is positioned in direct contact with the tapered edge 29 of the nozzle 28 and wherein the outflow section 8 is nil and the flow of gas is correspondingly shut off.

Laterally and parallel to the inflow conduit 4, the regulator body 2 houses a control rod 9, guided through its summit wall 22, which, by means of a rounded operative extremity, acts on the first face 7 of the shutter 6.

In the absence of force on the rod 9, the push rod 27 presses the shutter 6 against the nozzle 28 intercepting the gas in the inflow conduit 4. When the rod 9 is instead pressed on the first face 7 of the shutter 6, the push rod 27 reacts on the shutter 6 with an identical, parallel, but opposite and offset with respect to the first force, which is applied to the second face of the shutter 6.

The rod 9 from one side and the push rod 27 from the other therefore exert on the shutter 6, in mutual combination, a pair of forces able to impose to the shutter 6 an angular displacement β around an axis 26 transverse to the inflow conduit 4 (axis whereof only the shut-off point is shown in the Figures) which brings the shutter 6 to rotate and to determine the progressive opening of the gas outflow section 8, which is placed in an operative condition wherein the gas can flow into the chamber 3. In particular, the articulation point 26 coincides with the contact point(s) between the checking surface 30 and the tapered edge 29 of the nozzle 28.

Clearly, in this condition the greater or lesser opening of the outflow section 8 is determined by the intensity of the force applied to the rod 9 by the driving means; force which more in particular is applied to the rod 9 by a membrane 15 associated to an extremity of the rod 9 and contained inside the tank 18.

The membrane 15, which constitutes an integral part of the driving means, is situated inside the tank 18 in such a way as to subdivide it into two separate and vertically superposed chambers 19, 20. The lower chamber 19, adjacent to the regulator body 2, is in communication with the gas flow which, after traversing the chamber 3 and after travelling through the exhaust conduit 5 is downstream of the regulator 1 and provides feedback from its position with the tank 18. The upper chamber 20 instead contains a calibrated spring 21 which thrusts the membrane 15 with a force opposite to the pressure forces exerted by the fluid against the membrane 15 in the underlying chamber 19.

When the regulator 1 is in use, from the imbalance of the pressure and elastic reaction forces exerted on the opposite faces 16, 17 of the membrane 15 therefore is originated a proportional thrust force on the shutter 6 as a consequence whereof the outflow section 8 is progressively increased when gas pressure in the lower chamber 19 of the tank 18 is insufficient to balance the thrust of the spring 21 and which vice versa tends to reduce the outflow section 8 when the pressure of the fluid, in the lower chamber 19 of the tank 18, causes the spring 21 contained in the upper chamber 20 of the regulator 1 to move backward.

It is interesting to note that, by means of the adopted solution, the outflow section presents a "wedge", not annular, shape (as was the case in prior art solutions): this makes regulation during transients both smoother and more sensitive, with nearly linear values, as shown in Figure 2 (wherein the x-co-ordinate is the opening of the "pad" 30 in mm, whilst the y-co-ordinate is the passage area of the gas in mm²), wherein the left curve illustrates the characteristic of a traditional regulator RT, whilst the right curve illustrates the characteristic of the present solution, indicated as RA.

A further advanced embodiment of the regulator 1, shown in Figure 5, enables to provide the regulator 1 with means for regulating the flow of the fluid which, controlled by the very movement of the shutter 6, allow to intervene on the fluid dynamics of the gas when it is still inside the inflow conduit 4 or, more specifically, inside the nozzle 28.

The aforementioned regulating means comprise in particular a streamlined projecting body 32, associated with the shutter 6, which is inserted into the gas inflow conduit 4 opposing a pointed truncated cone-shaped extremity 40 to the flow of the gas.

The body 32 is provided with an inclined outer wall 34, with circular contour, having truncated cone profile complementary to that of the inner wall 33 of the nozzle 28. Between the two walls 33 and 34 is delimited a passage 35 within which the gas transits.

When the action of the rod 9 rotates the shutter 6 about the axis of rotation 26, opening the communication between the nozzle 28 and the chamber 3, the outer wall 34 of the body 32 arrives, in correspondence with the angular oscillation of the shutter 6, in contact with the inner wall 33 of the nozzle 28 in correspondence with points 36a, 36b which are differently located from each other longitudinally to the nozzle 28.

As a consequence thereof, the passage 35 is occluded in correspondence with the aforementioned points of contact and the fluid which travels through it is therefore deviated and forced to describe, along the terminal portion of the nozzle 28, helical trajectories to reach the outflow section 8. In the fluid current a forced vortex of minimal turbulence is thus generated, which allows to enhance the regularity of the flow rate in correspondence with its variations resulting from the regulating interventions effected by the shutter 6.

The regulator 1 according to the invention fully attains the fundamental aim of allowing the progressiveness of the regulation with minor fluctuations in the flow rate of the gas destined to be used; it further allows the additional advantage of enabling a certain constructive standardisation with respect to the embodiment of the regulator body 2. This can be readily understood by comparing Figures 1 and 3, wherein one can immediately observe that the different tanks 18 respectively devised to operate under a pressure differential of high intensity, or vice versa of low intensity, can be combined with a single, identical regulator body 2.

## Claims

1. Pressure regulator (1) for a fluid, comprising a regulator body (2) provided internally with a chamber (3) for receiving the fluid, with a conduit (4) for the inflow of the fluid into the chamber (3), with a conduit (5) for the exhaust of the fluid from the chamber (3) and with a shutter (6) housed in the chamber (3), opposite to the inflow conduit (4) and sustained by elastically yielding support means (27, 38, 37, 39) which contrast it in opposition to the direction of the flow of gas; the shutter (6) delimiting, in combination with the inflow conduit (4), an interposed section for the outflow (8) of the gas, and being movable between two limit conditions in correspondence with which the outflow section (8) is nil or vice versa is greatest; the regulator (1) further comprising means for driving the shutter (6) provided with a control rod (9), acting on a first face (7) of the shutter (6) in opposition with the support means (27, 38, 37, 39), which commands the opening of the outflow section (8) according to a fluid pressure feeding back from the exhaust conduit (5); wherein the support means (27, 38, 37, 39) of said shutter (6) and the control rod (9) of said shutter (6) are mutually offset and exert on the shutter (6), in mutual combination, a resulting couple of forces able to impose on the shutter (6) an angular displacement (β) about an axis (26) transverse to the inflow conduit (4), said angular displacement (β) determining the progressive opening, or - vice versa - the progressive closure of the outflow section (8) of the gas interposed between the shutter (6) and the inflow conduit (4), **characterised in that** the support means comprise a push rod (27) aligned with the inflow conduit (4), checking the shutter (6) in correspondence with its second face (13) opposite the face (7) whereon the control rod (9) acts, and **in that** the control rod (9) is laterally displaced with respect to the push rod (27).

2. Regulator according to claim 1, **characterised in that** the second face (13) of the shutter (6) has at least a concave portion (14) and the push rod (27) is provided with its own surface (24) for checking the shutter (6) with a curved shape, complementary to the concave part (14) of the second face (13) of the shutter (6).

3. Regulator according to claim 2, **characterised in that** the checking surface (24) of the push rod (27) presents a lesser curvature radius (11r) than the corresponding curvature radius (14R) of the concave portion (14) of the second face (13) of the shutter (6).

4. Regulator according to claim 1, **characterised in that** it comprises a nozzle (28) mounted on the inflow conduit (4), provided with a prominent annular edge (12), which projects into the chamber (3) and with which the shutter (6) delimits the outflow section (8).

5. Regulator according to claim 1, **characterised in that** the annular edge (12) is provided with a tapered extremity (29).

6. Regulator according to claim 5, **characterised in that** the first face (7) of the shutter (6) is provided with a surface (30) for checking the annular edge (12) depressed towards the interior of the shutter (6).

7. Regulator according to claim 6, **characterised in that** said checking surface (30) belongs to an insert (31) incorporated in the shutter (6) and made of a different constructive material from that of the shutter (6).

8. Regulator according to any of the previous claims, **characterised in that** it comprises means (32, 33) for regulating the flow of fluid which travels through the inflow conduit (4) controlled by the movement of the shutter (6).

9. Regulator according to claim 8, **characterised in that** the means for regulating the flow of fluid comprise a streamlined projecting body (32), associated to the shutter (6), which is inserted into the inflow conduit (4), regularising the flow of gas that travels through said inflow conduit (4).

10. Regulator according to claim 9, **characterised in that** the inflow conduit (4) is provided with an inner wall (33) inclined with respect to the axis (4a) of the inflow conduit (4) and **in that** the body (32) presents an outer wall (34) inclined complementarily to that of the inflow conduit (4) and forming in combination therewith an interposed passage (35) for the transit of the gas flow, the outer wall (34) of the body (32) arriving, in correspondence with the angular oscillation of the shutter (6), in contact with the inner wall (33) of the nozzle (28), occluding the passage (35) in points (36a, 36b) which are differently located from each other longitudinally to the inflow conduit (4) and deviating the fluid that travels through the passage (35) along trajectories of minimal turbulence.

11. Regulator according to claim 10, **characterised in that** the inner wall (33) of the inflow conduit (4) and the outer wall (34) of the body (32) have circular generatrix.

12. Regulator according to claim 11, **characterised in that** the inner wall (33) of the inflow conduit (4) and the outer wall (34) of the body (32) are truncated cone-shaped and deviate the flow of gas in such a way as to force it to follow helical trajectories along the terminal portion of the nozzle (28).

13. Regulator according to one of the previous claims wherein the driving means comprise a membrane (15) associated to an extremity of the rod (9) which exerts on the rod (9) itself a thrust proportional to the imbalance of opposite forces of pressure and elastic reaction exerted on opposite faces (16, 17) of the membrane (15), **characterised in that** a single regulator body (2) can be associated indifferently to a membrane (15) devised to operate under a pressure differential of high intensity or, vice versa, of low intensity.

14. Regulator according to claim 1, **characterised in that** the supporting means comprise a support body (37) provided with a guide (38), whereon the push rod (27) is slidingly mounted and whereto is associated an elastically yielding element (39) mounted so that it reacts against the push rod (27) constantly thrusting it towards the shutter (6).

15. Regulator according to claim 14, **characterised in that** the support body (37) is internally hollow and internally houses the elastically yielding element (39).

## Patentansprüche

1. Druckregler (1) für ein Medium, enthaltend einen Reglerkörper (2), der im Inneren mit einer Kammer (3) zur Aufnahme des Mediums, mit einer Leitung (4) für das Einströmen des Mediums in die Kammer (3), und mit einer Leitung (5) für das Ausströmen des Mediums aus der Kammer (3) versehen ist, sowie mit einem in der Kammer (3) und der Einströmleitung (4) gegenüberliegend angeordneten Verschluss (6), der federnd durch Stützmittel (27, 38, 37, 39) gehalten ist, welche ihn entgegengesetzt zu der Richtung des Gasstromes drücken; wobei der Verschluss (6) zusammen mit der Einströmleitung (4) einen zwischengesetzten Abschnitt (8) für das Ausströmen des Gases bildet und zwischen zwei Grenzzuständen beweglich ist, in welchen der Ausströmabschnitt (8) gleich Null oder umgekehrt am grössten ist; und wobei der Regler (1) ausserdem Mittel zur Betätigung des Verschlusses (6) enthält, versehen mit einer Steuerstange (9), die auf eine erste Fläche (7) des Verschlusses (6) und entgegen zu den Stützmitteln (27, 38, 37, 39) wirkt, und welche das Öffnen des Ausströmabschnittes (8) je nach einem Druck des Mediums besorgt, das von der Ausströmleitung (5) zurückströmt; bei welchem die Stützmittel (27, 38, 37, 39) des genannten Verschlusses (6) und die Steuerstange (9) des genannten Verschlusses (6) gegenseitig zueinander versetzt sind und in Kombination miteinander auf den Verschluss (6) ein sich ergebendes Kräftepaar bilden, das in der Lage ist, dem Verschluss (6) eine winkelmässige Verschiebung (β) um eine Achse (26) quer zu der Einströmleitung (4) zu verleihen, wobei die winkelmässige Verschiebung (β) das allmähliche Öffnen oder umgekehrt das allmähliche Schliessen des Ausströmabschnittes (8) des Gases bewirkt, der sich zwischen dem Verschluss (6) und der Einströmleitung (4) befindet, **dadurch gekennzeichnet, dass** die Stützmittel eine Stösselstange (27) enthalten, ausgerichtet zu der Einströmleitung (4), die auf den Verschluss (6) trifft, und zwar entsprechend zu dessen zweiter Fläche (13), die sich entgegengesetzt zu der Fläche (7) befindet, auf welche die Steuerstange (9) wirkt, und dadurch, dass die Steuerstange (9) im Verhältnis zu der Stösselstange (27) seitlich versetzt ist.

2. Regler nach Patentanspruch 1, **dadurch gekennzeichnet, dass** die zweite Fläche (13) des Verschlusses (6) wenigstens einen konkaven Abschnitt (14) hat und die Stösselstange (27) mit einer eigenen Oberfläche (24) zum Anschlagen an den Verschluss (6), und zwar von gebogener Form und sich mit dem konkaven Teil (14) der zweiten Fläche (13) des Verschlusses (6) ergänzend.

3. Regler nach Patentanspruch 2, **dadurch gekennzeichnet, dass** die Anschlagfläche (24) der Stösselstange (27) einen geringeren Krümmungsradius (11r) aufweist als der entsprechende Krümmungsradius (14R) des konkaven Abschnittes (14) der zweiten Fläche (13) des Verschlusses (6).

4. Regler nach Patentanspruch 1, **dadurch gekennzeichnet, dass** er eine Düse (28) enthält, montiert an der Einströmleitung (4) und mit einem hervorstehenden ringförmigen Rand (12) versehen, welcher in die Kammer (3) hineinragt und mit welchem der Verschluss (6) den Ausströmabschnitt (8) abgrenzt.

5. Regler nach Patentanspruch 1, **dadurch gekennzeichnet, dass** der ringförmige Rand (12) mit einem verjüngten Ende (29) versehen ist.

6. Regler nach Patentanspruch 5, **dadurch gekennzeichnet, dass** die erste Fläche (7) des Verschlusses (6) mit einer Fläche (30) für den Anschlag des ringförmigen Randes (12) versehen ist, welche zum Inneren des Verschlusses (6) hin abgesenkt ist.

7. Regler nach Patentanspruch 6, **dadurch gekennzeichnet, dass** die genannte Anschlagfläche (30) zu einem Einsatz (31) gehört, der in dem Verschluss (6) enthalten und aus einem anderen Konstruktionsmaterial hergestellt ist als das des Verschlusses (6).

8. Regler nach einem beliebigen der vorstehenden Patentansprüche, **dadurch gekennzeichnet, dass** er Mittel (32, 33) zum Regulieren des Flusses des Mediums enthält, welches durch die Einströmleitung (4) strömt, gesteuert durch die Bewegung des Verschlusses (6).

9. Regler nach Patentanspruch 8, **dadurch gekennzeichnet, dass** die Mittel zum Regulieren des Flusses des Mediums einen stromlinienförmigen, hervorstehenden und dem Verschluss (6) zugeordneten Körper (32) enthalten, welcher in die Einströmleitung (4) eingesetzt ist, wobei er den Fluss des durch die genannte Einströmleitung (4) strömenden Gases reguliert.

10. Regler nach Patentanspruch 9, **dadurch gekennzeichnet, dass** die Einströmleitung (4) mit einer inneren Wand (33) versehen ist, geneigt im Verhältnis zu der Achse (4a) der Einströmleitung (4), und dadurch, dass der Körper (32) eine äussere Wand (34) aufweist, ebenfalls geneigt und sich ergänzend mit jener der Einströmleitung (4) und in Kombination mit dieser einen zwischengesetzten Durchlass (35) für das Durchfliessen des Gasstromes bildend, wobei die äussere Wand (34) des Körpers (32) entsprechend einer winkelmässigen Schwingung des Verschlusses (6) in Kontakt mit der inneren Wand (33) der Düse (28) gelangt und den Durchlass (35) an Punkten (36a, 36b) verschliesst, die unterschiedlich voneinander in Längsrichtung zu der Einströmleitung (4) angeordnet sind und das Medium, das durch der Durchlass (35) strömt, zu Bahnen von minimalen Turbulenzen ableitet.

11. Regler nach Patentanspruch 10, **dadurch gekennzeichnet, dass** die innere Wand (33) der Einströmleitung (4) und die äussere Wand (34) des Körpers (32) eine kreisförmige Erzeugende haben.

12. Regler nach Patentanspruch 11, **dadurch gekennzeichnet, dass** die innere Wand (33) der Einströmleitung (4) und die äussere Wand (34) des Körpers (32) stumpfkegelförmig sind und den Gasstrom auf solche Weise ableiten, dass dieser gezwungen ist, schneckenförmigen Bahnen entlang dem Endabschnitt der Düse (28) zu folgen.

13. Regler nach einem der vorstehenden Patentansprüche, bei welchem die Antriebsmittel eine Membrane (15) enthalten, die einem Ende der Stange (9) zugeordnet ist, und welche auf die Stange (9) selbst einen Druck proportional zu der Ungleichheit von sich gegenüber stehenden Druckkräften und der auf die entgegengesetzten Flächen (16, 17) der Membrane (15) ausgeübten elastischen Reaktion bewirkt, **dadurch gekennzeichnet, dass** ein einziger Reglerkörper (2) unabhängig einer Membrane (15) zugeordnet werden kann, die dazu ausgelegt ist, unter einer Druckdifferenz von grosser Stärke oder umgekehrt von geringer Stärke zu arbeiten.

14. Regler nach Patentanspruch 1, **dadurch gekennzeichnet, dass** die Stützmittel einen Stützkörper (37) enthalten, Versehen mit einer Führung (38), an welcher die Stösselstange (27) gleitbar montiert ist, und welcher ein elastisch federndes und so montiertes Element (39) zugeordnet ist, dass es gegen die Stösselstange (27) reagiert und diese ständig in Richtung des Verschlusses (6) drückt.

15. Regler nach Patentanspruch 14, **dadurch gekennzeichnet, dass** der Stützkörper (37) innen hohl ist und innen ein elastische federndes Element (39) aufnimmt.

## Revendications

1. Un régulateur de pression (1) pour un fluide, comprenant un corps de régulateur (2) pourvu, à l'intérieur, d'une chambre (3) pour la réception du fluide, d'un conduit (4) pour l'arrivée du fluide dans la chambre (3), d'un conduit (5) pour l'évacuation du fluide de la chambre (3) et d'un obturateur (6) logé dans la chambre (3), opposé au conduit d'arrivé (4) et supporté par des moyens de support (27, 38, 37, 39) pouvant céder de manière élastique qui le font s'opposer au sens du flux de gaz ; l'obturateur (6) délimitant, en association avec le conduit d'arrivée (4), une section interposée pour l'écoulement (8) du gaz, et étant mobile entre deux conditions limites dans lesquelles la section d'écoulement (8) est nulle ou, inversement, est maximale ; le régulateur (1) comprenant aussi des moyens d'actionnement de l'obturateur (6) pourvus d'une tige de commande (9), agissant sur une première face (7) de l'obturateur (6) en opposition avec les moyens de support (27, 38, 37, 39), qui commande l'ouverture de la section d'écoulement (8) en fonction d'une rétroaction de pression du fluide depuis le conduit d'évacuation (5) ; où les moyens de support (27, 38, 37, 39) de l'obturateur (6) susmentionné et la tige de commande (9) de ce même obturateur (6) sont réciproquement décalés et exercent sur l'obturateur (6), en association mutuelle, un couple de forces résultant en mesure d'imposer à l'obturateur (6) un déplacement angulaire (β) par rapport à un axe (26) transversal au conduit d'arrivée (4), ledit déplacement angulaire (β) déterminant l'ouverture progressive ou - inversement - la fermeture progressive de la section d'écoulement (8) du gaz interposée entre l'obturateur (6) et le conduit d'arrivée (4), ledit régulateur (1) étant **caractérisé en ce que** les moyens de support comprennent une tige de poussée (27) alignée avec le conduit d'arrivée (4), rencontrant l'obturateur (6) au niveau de sa deuxième face (13) opposée à la face (7) sur laquelle agit la tige de commande (9), et **en ce que** la tige de commande (9) est latéralement décalée par rapport à la tige de poussée (27).

2. Le régulateur selon la revendication 1, **caractérisé en ce que** ladite deuxième face (13) de l'obturateur (6) a au moins une partie concave (14) et **en ce que** la tige de poussée (27) présente une propre surface (24) destinée à rencontrer l'obturateur (6) et ayant une forme courbe, complémentaire à la partie concave (14) de la deuxième face (13) de l'obturateur (6).

3. Le régulateur selon la revendication 2, **caractérisé en ce que** ladite surface de rencontre (24) de la tige de poussée (27) présente un rayon de courbure (11r) plus petit que le rayon de courbure (14R) correspondant de la partie concave (14) de la deuxième face (13) de l'obturateur (6).

4. Le régulateur selon la revendication 1, **caractérisé en ce qu'**il comprend une buse (28) montée sur le conduit d'arrivée (4), pourvue d'un bord annulaire (12) en saillie, qui se projette dans la chambre (3) et avec lequel l'obturateur (6) délimite la section d'écoulement (8).

5. Le régulateur selon la revendication 1, **caractérisé en ce que** ledit bord annulaire (12) est pourvu d'une extrémité effilée (29).

6. Le régulateur selon la revendication 5, **caractérisé en ce que** ladite première face (7) de l'obturateur (6) présente une surface (30) destinée à rencontrer le bord annulaire (12) et abaissée vers l'intérieur de l'obturateur (6).

7. Le régulateur selon la revendication 6, **caractérisé en ce que** ladite surface (30) de rencontre appartient à un insert (31) incorporé dans l'obturateur (6) et réalisé dans un matériau de construction autre que celui de l'obturateur (6).

8. Le régulateur selon l'une quelconque des revendications précédentes, **caractérisé en ce qu'**il comprend des moyens (32, 33) destinés à réguler le flux de fluide qui circule à travers le conduit d'arrivée (4) et commandés par le mouvement de l'obturateur (6).

9. Le régulateur selon la revendication 8, **caractérisé en ce que** lesdits moyens de régulation du flux de fluide comprennent un corps saillant (32) fuselé, associé à l'obturateur (6), qui est introduit dans le conduit d'arrivée (4), régulant le flux de gaz qui circule à travers ce même conduit (4).

10. Le régulateur selon la revendication 9, **caractérisé en ce que** ledit conduit d'arrivée (4) est pourvu d'une paroi intérieure (33) inclinée par rapport à l'axe (4a) de ce même conduit d'arrivée (4) et **en ce que** le corps (32) présente une paroi extérieure (34) inclinée de manière complémentaire à celle du conduit d'arrivée (4) et formant, en association avec cette dernière, un passage interposé (35) pour le transit du flux de gaz, la paroi extérieure (34) du corps (32) arrivant, en rapport avec l'oscillation angulaire de l'obturateur (6), en contact avec la paroi intérieure (33) de la buse (28), fermant le passage (35) en des points (36a, 36b) différemment positionnés entre eux longitudinalement au conduit d'arrivée (4) et déviant le fluide qui circule à travers le passage (35) le long de trajectoires de turbulence minimale.

11. Le régulateur selon la revendication 10, **caractérisé en ce que** ladite paroi intérieure (33) du conduit d'arrivée (4) et ladite paroi extérieure (34) du corps (32) ont une génératrice circulaire.

12. Le régulateur selon la revendication 11, **caractérisé en ce que** ladite paroi intérieure (33) du conduit d'arrivée (4) et ladite paroi extérieure (34) du corps (32) sont troncoconiques et dévient le flux de gaz de manière à le contraindre à suivre des trajectoires hélicoïdales le long de la partie terminale de la buse (28).

13. Le régulateur selon l'une quelconque des revendications précédentes, où lesdits moyens d'actionnement comprennent une membrane (15) associée à une extrémité de la tige (9) qui exerce sur cette même tige (9) une poussée proportionnelle au déséquilibre des forces opposées de pression et de réaction élastique exercées sur des faces opposées (16, 17) de la membrane (15), **caractérisé en ce qu'**un corps de régulateur (2) unique peut être indifféremment associé à une membrane (15) conçue pour opérer sous un différentiel de pression de haute intensité ou, inversement, de basse intensité.

14. Le régulateur selon la revendication 1, **caractérisé en ce que** lesdits moyens de support comprennent un corps de support (37) pourvu d'un guide (38) sur lequel la tige de poussée (27) est montée de manière coulissante et où est associé un élément (39) pouvant céder de manière élastique et monté de manière à réagir en permanence contre la tige de poussée (27), la poussant vers l'obturateur (6).

15. Le régulateur selon la revendication 14, **caractérisé en ce que** ledit corps de support (37) est creux et loge à l'intérieur ledit élément (39) pouvant céder de manière élastique.
